# EUROPEAN PATENT APPLICATION

(11) **EP 4 470 750 A1**
(43) Date of publication of application: **04.12.2024**
(21) Application number: 23177102.3
(22) Date of filing: 02.06.2023
(51) Int. Cl.: B29C 49/20, B29C 49/42, B29C 49/48, B29L 31/00, B60K 15/03

(54) **THERMOPLASTIC TANK AND METHOD FOR MANUFACTURING THE THERMOPLASTIC TANK**

(71) Applicant: Plastic Omnium Advanced Innovation and Research, 1200 Bruxelles (BE)
(72) Inventor: KIM, Tae-Gwon, 1130 BRUXELLES (BE)
(74) Representative: LLR

(57) **Abstract**

The invention relates to a blow moulding tool (100) for manufacturing a tank comprising:
an insertion pin (102) configured to position a component (104) through an opening of a closed tubular parison (106);
a mould;
a first and a second mould portions (108, 110) each comprise a cavity (112, 113) with a movement member (114, 114', 115, 115') moving in a direction perpendicular to an extrusion direction of the closed tubular parison;
a first and a second displaceable spacers (116, 118) arranged on a periphery of the cavity of the first mould portion and the second mould portion, respectively, and configured to move into three positions (open, partially-open and closed) on an axis perpendicular to the extrusion direction of the closed tubular parison;
When the blow moulding tool is partially-open, the first and the second displaceable spacers are configured to receive a third displaceable spacer (120).

## Description

The present invention relates to a blow moulding tool and a method for manufacturing a thermoplastic tank for a vehicle, preferably a thermoplastic fuel tank for a vehicle.

Liquid systems on board of vehicles generally comprise a thermoplastic tank for storing a liquid, said tank comprising at least one internal component, such as for example a baffle, which may be voluminous.

Conventionally, thermoplastic tanks for vehicles are obtained by extrusion blow moulding of a closed tubular parison, the internal component being introduced into the thermoplastic tank and attached to it during the manufacturing of the thermoplastic tank.

However, the current manufacturing methods have a limit on the shape of the internal component because it needs to be inserted into the closed tubular parison during the blow moulding process without causing any damage to the closed tubular parison. The method for manufacturing the thermoplastic tank for a vehicle thereof is known for example from WO 2008138869 A1.

The inserted component needs to keep clearance to the closed tubular parison during insertion process to ensure that it is properly positioned and does not interfere with the expansion of the closed tubular parison. If the component is too large or too thick, it can cause the closed tubular parison to bulge or wrap, resulting in an improperly shaped thermoplastic tank. Additionally, if the component is too close to the walls of the closed tubular parison, it can create uneven pressure during the blow moulding process, which can lead to defects in the manufactured thermoplastic tank

The present invention proposes a solution to address the aforementioned problems.

According to a first aspect of the present invention, there is provided a blow moulding tool for manufacturing a thermoplastic tank for a vehicle, preferably a thermoplastic fuel tank for a vehicle.

The blow moulding tool for manufacturing a thermoplastic tank for a vehicle, preferably a thermoplastic fuel tank for a vehicle, according to the invention comprises:
▪ at least one insertion pin configured to position at least one component through an opening at a first distal end of a closed tubular parison;
▪ a mould configured to receive the closed tubular parison, wherein the mould comprises at least:
   - a first mould portion and a second mould portion and the mould portions each comprise a cavity with at least one movement member configured to move in a direction substantially perpendicular to an extrusion direction of the closed tubular parison;
   - a first displaceable spacer arranged on a periphery of the cavity of the first mould portion;
   - a second displaceable spacer arranged on a periphery of the cavity of the second mould portion;
   - wherein the first displaceable spacer and the second displaceable spacer are configured to move into each of a first position, a second position and a third position on an axis substantially perpendicular to the extrusion direction of the closed tubular parison;
   - the first position corresponding to the blow moulding tool being open, the second position corresponding to the blow moulding tool being partially-open, and the third position corresponding to the blow moulding tool being closed;
   - when the blow moulding tool is partially-open, the first displaceable spacer and the second displaceable spacer are configured to receive a third displaceable spacer in a region between the first displaceable spacer and the second displaceable spacer, and
   - wherein the third displaceable spacer comprises a first displaceable half and a second displaceable half, the third displaceable spacer being configured to surround the at least one insertion pin and to create a void space inside the closed tubular parison allowing the at least one insertion pin to move and be positioned into alignment with the at least one movement member present in each cavity of the first mould portion and the second mould portion.

The term "closed tubular parison" in terms of the invention refers to a tube being open at a first distal end and closed at a second distal end. The first distal end and the second distal end are situated away from the central part of said tube.

The expression "closed at a second distal end" as used herein is intended to mean that the second distal end of the closed tubular parison is to be sealed by an extrusion head or any other suitable devices, or by welding of the walls of the closed tubular parison at the second distal end.

The expression "the mould portions each comprise a cavity" should be understood as meaning a hollow inside the first mould portion and the second mould portion, respectively. This cavity corresponds to the external surface of the thermoplastic tank to be produced.

The term "movement member" refers to a member that is preferably cylindrical in shape. The movement of the member is controlled such that it travels in a direction that is substantially perpendicular to an extrusion direction of the closed tubular parison. The meaning of "substantially perpendicular", as employed herein, is intended to include the direction that is oriented between 85 and 95 degrees relative to the extrusion direction of the closed tubular parison. Furthermore, the movement member serves the purpose of exerting controlled movement and pressure on the closed tubular parison at the location of its attachment to the at least one component. Optimally, each cavity comprises a pair of movement members, wherein each member preferably has a shape resembling a cylinder, that are arranged parallel to one another.

In the context of the present invention, the expression "periphery of the cavity" refers to the outer edge or boundary of the cavity of the first and second mould portions. When the two mould portions are brought together:
- the first displaceable spacer is located at the joining surface or edge of this joint surface of the first mould portion. In other words, the first displaceable spacer is positioned along the periphery of the cavity in the first mould portion, which is adjacent to the joining surface;
- the second displaceable spacer is located at the joining surface or edge of this joint surface of the second mould portion. In essence, the second displaceable spacer is positioned along the periphery of the cavity in the second mould portion, which is adjacent to the joining surface.

In this invention, the expression "joining surface" is intended to indicate the surface of the mould where the two mould portions meet or come together to form a seal of the manufactured thermoplastic tank.

The first displaceable spacer and the second displaceable spacer may be configured to move into each of a first position, a second position and a third position on an axis substantially perpendicular to the extrusion direction of the closed tubular parison. The term "substantially" is used to indicate that the first and second displaceable spacers may be configured to move into open, partially-open and closed positions along an axis that is oriented at an angle between 85 and 95 degrees relative to the extrusion direction of the closed tubular parison.

The first position may correspond to the blow moulding tool being open, the second position may correspond to the blow moulding tool being partially-open, and the third position may correspond to the blow moulding tool being closed.

When the blow moulding tool is partially-open, the first displaceable spacer and the second displaceable spacer may be configured to receive a third displaceable spacer in a region between the first displaceable spacer and the second displaceable spacer. The third displaceable spacer may comprise a first displaceable half and a second displaceable half, being configured to surround the at least one insertion pin and to create a void space inside the closed tubular parison allowing the at least one insertion pin to move and be positioned into alignment with the at least one movement member present in each cavity of the first mould portion and the second mould portion.

Within the framework of the invention, the mould used to form the thermoplastic tank comprises the first mould portion and the second mould portion that can be positioned relative to each other. The mould can be in an open, partially-open or closed position.

The open position of the mould refers to a configuration in which the first mould portion and the second mould portion are fully separated from each other, allowing for the insertion of the closed tubular parison into the mould cavity. In this position, the mould portions are at their maximum distance from each other, providing ample space for the placement of the closed tubular parison.

The partially-open position of the mould refers to a configuration in which the first mould portion and the second mould portion are positioned at a predetermined distance from each other, allowing for the insertion of the third displaceable spacer between them. In this position, the distance between the mould portions is less than the distance between them when the mould is in the open position, but greater than the distance between them when the mould is in the closed position. The predetermined distance may be adjustable or fixed and may be determined based on the desired size and shape of the final product.

The closed position of the mould refers to a configuration in which the first mould portion and the second mould portion are brought together to form a sealed cavity around the closed tubular parison. In this position, the mould portions are in intimate contact with each other, forming the final shape of the thermoplastic fuel tank.

The blow moulding tool of the present invention aims to create a thermoplastic fuel tank using a closed tubular parison that is smaller than what is typically used in traditional blow moulding processes. By reducing the size of the parison, the amount of material used is also reduced while still achieving the desired shape and volume of the final product. Overall, the blow moulding tool offers a cost-effective and sustainable solution for producing thermoplastic fuel tanks.

According to a preferred embodiment, the blow moulding tool according to the invention is such that the at least one insertion pin may be configured to position a plurality of components through the opening at the distal end of the closed tubular parison. The ability to incorporate multiple components simultaneously into the mould increases production efficiency and reduces costs.

According to a preferred embodiment, the blow moulding tool according to the invention is such that the at least one component may have a length equal to or less than the diameter of the closed tubular parison.

This allows for easier insertion of component into the parison, as there is less risk of component getting stuck or damage during insertion. The at least one component can be an internal reinforcement element, such as a pillar, a baffle, a carrier, or a valve, but in a particular preferred embodiment, the at least one component is a pillar. For example, the pillar can provide a reinforcement to the manufactured tank which can help to prevent deformation and improve the quality of the thermoplastic fuel tanks produced.

According to a second aspect of the present invention, there is provided a method for manufacturing a thermoplastic tank for a vehicle, preferably a thermoplastic fuel tank for a vehicle.

The method according to the invention comprises at least the steps of:
▪ providing a closed tubular parison with an opening at a first distal end;
▪ placing the closed tubular parison between a first mould portion and a second mould portion of a mould, wherein the first mould portion and the second mould portion each comprise a cavity with at least one movement member configured to move in a direction substantially perpendicular to an extrusion direction of the closed tubular parison;
▪ providing a third displaceable spacer, wherein the third displaceable spacer comprises a first displaceable half and a second displaceable half;
▪ surrounding at least one insertion pin with the first displaceable half and the second displaceable half;
▪ inserting the at least one insertion pin surrounded by the first displaceable half and the second displaceable half through the opening of the distal end of the closed tubular parison, wherein the at least one insertion pin comprises at least one component to be positioned in the closed tubular parison;
▪ moving a first displaceable spacer arranged on a periphery of the cavity of the first mould portion and moving a second displaceable spacer arranged on a periphery of the cavity of the second mould portion into a first position on an axis substantially perpendicular to the extrusion direction of the closed tubular parison, wherein the first position corresponds to the blow moulding tool being open;
▪ moving the first displaceable spacer arranged on the periphery of the cavity of the first mould portion and moving the second displaceable spacer arranged on the periphery of the cavity of the second mould portion into a second position on the axis substantially perpendicular to the extrusion direction of the closed tubular parison, wherein the second position corresponds to the blow moulding tool being partially-open;
▪ arranging the third displaceable spacer in a region between the first displaceable spacer and the second displaceable spacer when the blow moulding tool is partially-open, and moving the at least one insertion pin into alignment with the at least one movement member present in each cavity of the first mould portion and the second mould portion;
▪ performing a first blowing of the closed tubular parison;
▪ reducing the pressure within the mould;
▪ removing the third displaceable spacer from the at least one insertion pin;
▪ moving the at least one insertion pin within the closed tubular parison;
▪ positioning the at least one component towards the at least one movement member;
▪ welding the at least one component to the closed tubular parison by moving the at least one movement member;
▪ removing the at least one insertion pin from the closed tubular parison;
▪ moving the first displaceable spacer arranged on the periphery of the cavity of the first mould portion and moving the second displaceable spacer arranged on the periphery of the cavity of the second mould portion into a third position on the axis substantially perpendicular to the extrusion direction of the closed tubular parison, wherein the third position corresponds to the blow moulding tool being closed;
▪ performing a second blowing of the closed tubular parison.

In a preferred embodiment of the invention, the method for manufacturing a thermoplastic tank for a vehicle, preferably a thermoplastic fuel tank for a vehicle, may comprise the steps of: (a) providing a closed tubular parison with an opening at a distal end; (b) placing the closed tubular parison between a first mould portion and a second mould portion of a mould, wherein the first mould portion and the second mould portion each may comprise a cavity with at least one movement member configured to move in a direction substantially perpendicular to an extrusion direction of the closed tubular parison; (c) providing a third displaceable spacer, wherein the third displaceable spacer may comprise a first displaceable half and a second displaceable half; (d) surrounding at least one insertion pin with the first displaceable half and the second displaceable half; (e) inserting the at least one insertion pin through the opening of the distal end of the closed tubular parison, wherein the at least one insertion pin may comprise at least one component to be positioned in the closed tubular parison and (f) moving a first displaceable spacer arranged on a periphery of the cavity of the first mould portion and moving a second displaceable spacer arranged on a periphery of the cavity of the second mould portion into a first position on an axis substantially perpendicular to the extrusion direction of the closed tubular parison, wherein the first position may correspond to the blow moulding tool being open.

The present invention provides a method for manufacturing a thermoplastic tank for a vehicle, preferably a thermoplastic fuel tank for a vehicle, comprising steps (b), (c), (e) and (f), which can be performed in any order, or even simultaneously. Step (d) is designed to occur after step (c). The order in which these steps are performed is not fixed, allowing for flexibility in the implementation of the method. However, the preferred embodiment of the invention involves performing the steps in the order of (b), (c), (d), (e) and (f).

The method for manufacturing a thermoplastic tank for a vehicle, preferably a thermoplastic fuel tank for a vehicle further comprises the steps of: (g) moving the first displaceable spacer arranged on the periphery of the cavity of the first mould portion and moving the second displaceable spacer arranged on the periphery of the cavity of the second mould portion into a second position on the axis substantially perpendicular to the extrusion direction of the closed tubular parison, wherein the second position may correspond to the blow moulding tool being partially-open and, (h) arranging the third displaceable spacer in a region between the first displaceable spacer and the second displaceable spacer when the blow moulding tool is partially-open, and moving the at least one insertion pin into alignment with the at least one movement member present in each cavity of the first mould portion and the second mould portion. The step (g) is to be carried out subsequent to step (f).

Furthermore, the method for manufacturing a thermoplastic tank for a vehicle, preferably a thermoplastic fuel tank for a vehicle, comprises the following steps: (i) performing a first blowing of the closed tubular parison; (j) reducing the pressure within the mould; (k) removing the third displaceable spacer from the at least one insertion pin; (1) moving the at least one insertion pin within the closed tubular parison and, (m) positioning the at least one component towards the at least one movement member. The step (i) is to be carried out subsequent to step (h).

In addition, the method for manufacturing a thermoplastic tank for a vehicle, preferably a thermoplastic fuel tank for a vehicle, also comprises further steps: (n) welding the at least one component to the closed tubular parison by moving the at least one movement member; (o) removing the at least one insertion pin from the closed tubular parison; (p) moving the first displaceable spacer arranged on the periphery of the cavity of the first mould portion and moving the second displaceable spacer arranged on the periphery of the cavity of the second mould portion into a third position on the axis substantially perpendicular to the extrusion direction of the closed tubular parison, wherein the third position may correspond to the blow moulding tool being closed and, (q) performing a second blowing of the closed tubular parison. The step (n) is to be carried out subsequent to step (m).

The advantage of the method for manufacturing a thermoplastic tank for a vehicle, preferably a thermoplastic fuel tank for a vehicle, according to the invention is that it saves material by reducing the thickness of the tank walls while still maintaining structural integrity. This results in a more cost-effective and efficient process.

According to a preferred embodiment of the method for manufacturing a thermoplastic tank for a vehicle, preferably a thermoplastic fuel tank for a vehicle, according to the invention, the at least one component is inserted into the closed tubular parison through a vertical movement, said movement being parallel to the extrusion direction of the closed tubular parison.

According to a preferred embodiment of the method for manufacturing a thermoplastic tank for a vehicle, preferably a thermoplastic fuel tank for a vehicle, according to the invention, the step of removing the third displaceable spacer from the at least one insertion pin comprises a step of splitting the third displaceable spacer into the first displaceable half and the second displaceable half. Beneficially, this results in an improved control over the parison expansion. The first displaceable half and the second displaceable half can be adjusted to provide an optimal amount of space for the insertion pin and ensure that the parison expands uniformly during the blow moulding process.

According to a preferred embodiment of the method for manufacturing a thermoplastic tank for a vehicle, preferably a thermoplastic fuel tank for a vehicle, according to the invention, the at least one component comprises at least one spring element arranged on one side of the at least one component. Preferably, the at least one spring element is arranged on both sides of the at least one component. The at least one spring element should be understood as meaning a mechanical component that is designed to provide a certain amount of flexibility. The spring element is used to prevent the component from breaking or being deformed under high pressure exerted by the at least one movement member during the blow moulding process. The spring element can be in the form of a spring, a moving track, or a simple slide, as long as it allows for movement of the component.

According to a preferred embodiment of the method for manufacturing a thermoplastic tank for a vehicle, preferably a thermoplastic fuel tank for a vehicle, according to the invention, the at least one component has a length equal to or less than a diameter of the closed tubular parison. Having a shorter component can help reduce material usage and minimize waste in the manufacturing process.

According to a preferred embodiment of the method for manufacturing a thermoplastic tank for a vehicle, preferably a thermoplastic fuel tank for a vehicle, according to the invention, the at least one component is a pillar. The at least one component can be an internal reinforcement element, such as a pillar, a baffle, a carrier, or a valve, but in a preferred embodiment, the at least one component is a pillar. For example, the pillar can provide a reinforcement to the blow moulding tool, which can help to prevent deformation and improve the quality of the thermoplastic fuel tanks produced.

Further objectives, features, and advantages of the blow moulding tool according to the present invention will be apparent from the description below and the appended drawings.

The accompanying drawings illustrate preferred embodiments of the present invention and together with the foregoing invention, serve to provide further understanding of the technical features of the present invention, and thus, the present invention is not intended as being limited to the drawings.
FIG. 1A is a cross-section view of a blow moulding tool in an open position having an extruded closed tubular parison in a mould according to the present invention.
FIG. 1B is a cross-section view of the blow moulding tool in the open position having at least one insertion pin surrounded by a first displaceable half and a second displaceable half.
FIG. 1C is a cross-section view of the blow moulding tool in the open position having the at least one insertion pin inserted through an opening of a first distal end of the extruded closed tubular parison.
FIG. 2A and FIG. 2B are a cross-section view and a bottom view of the blow moulding tool in a partially-open position having a third displaceable spacer in a region between a first displaceable spacer and a second displaceable spacer, respectively.
FIG. 2C and FIG. 2D are a cross-section view and a bottom view of the blow moulding tool in the partially-open position having the third displaceable spacer split into the first displaceable half and the second displaceable half.
FIG. 2E is a cross-section view of the blow moulding tool in the partially-open position having the at least one component welded to the closed tubular parison.
FIG. 3 is a cross-section view of the blow moulding tool in a closed position to form the final shape of a thermoplastic fuel tank.

In the different figures, the same reference signs refer to the same or analogous elements.

Hereinafter, preferred embodiments of the present invention will be described in detail with reference to the accompanying drawings. In the accompanying drawings, the dimensions of the structures are shown in an enlarged scale for clarity of the invention.

Expressions such as "comprising", "is" used to describe and claim the present invention are intended to be constructed in a non-exclusive manner, namely allowing for items, components or elements not explicitly described also to be present.

Additionally, all numerical terms, such as "first", "second", "third" should also be taken only as identifiers, to assist the reader's understanding of the various elements, variations and/or modifications of the present invention, and may not create any limitations, particularly as to the order, or preference, of any element relative to or over another element.

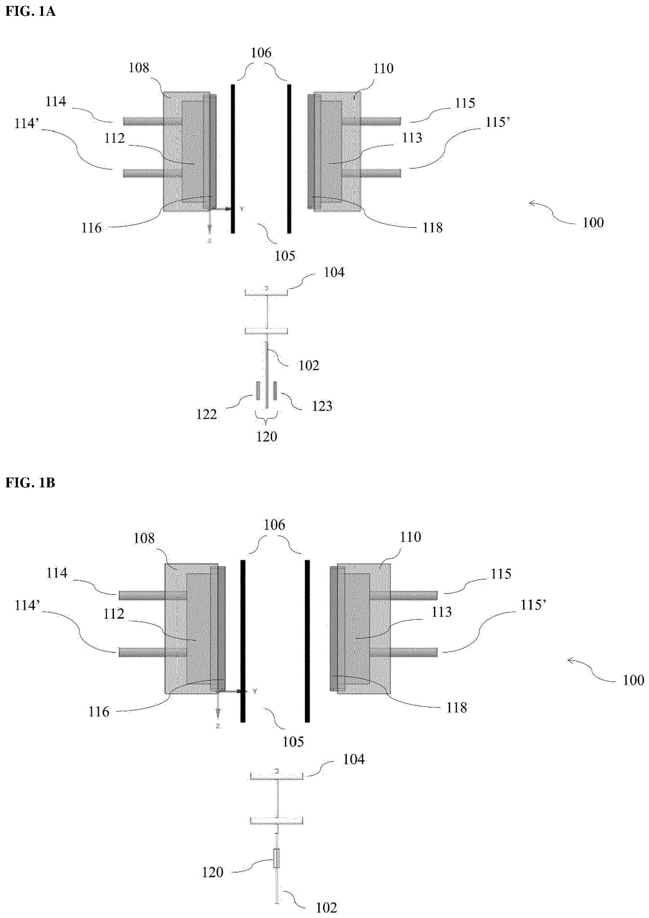

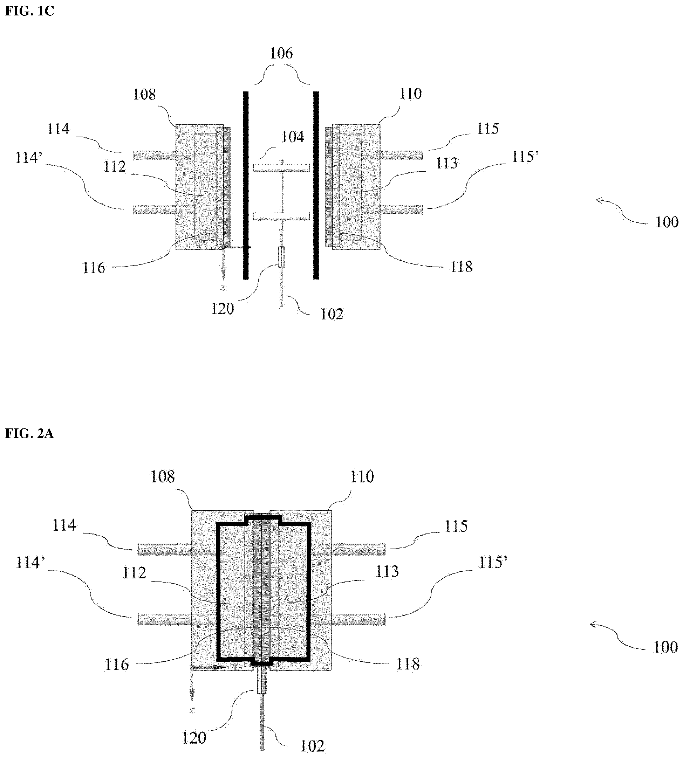

In FIG. 1A, the blow moulding tool 100 for manufacturing a thermoplastic fuel tank according to the invention is illustrated.

The blow moulding tool 100 comprises at least one insertion pin 102 that is configured to position at least one component 104 through an opening at a first distal end 105 of a closed tubular parison 106.

The at least one component 104 is inserted into the closed tubular parison 106 through a vertical movement, which is parallel to an extrusion direction of the closed tubular parison 106. Furthermore, the at least one component 104 may have a length equal to or less than the diameter of the closed tubular parison 106. As in the exemplary embodiment represented, the at least one component 104 is a pillar. Alternatively, the at least one component 104 can be any one of the following: a baffle, a carrier, or a valve.

The at least one insertion pin 102 may be configured to position a plurality of components 104 through the opening at the first distal end 105 of the closed tubular parison 106.

The blow moulding tool 100 further comprises a mould. The mould comprises a first mould portion 108 and a second mould portion 110. When the blow moulding tool 100 is open (i.e. the mould is in an open position - a first position), the first mould portion 108 and the second mould portion 110 are fully separated from each other, allowing for the insertion of the closed tubular parison 106 between them, as represented in FIGS. 1A to 1C. Each mould portion 108, 110 comprises a cavity 112, 113 with at least one movement member 114, 114', 115, 115'. As evidenced by the visual representation in FIG. 1A, each cavity is comprised of a pair of movement members 114, 114', 115, 115' arranged in parallel, with a shape preferably cylindrical. The at least one movement member 114, 114', 115, 115' is configured to move in a direction substantially perpendicular to an extrusion direction of the closed tubular parison 106, with the direction of movement oriented at an angle between 85 and 95 degrees, preferably at an angle equal to 90 degrees, relative to the extrusion direction of the closed tubular parison 106.

The blow moulding tool 100 also comprises a first displaceable spacer 116 arranged on a periphery of the cavity 112 of the first mould portion 108 and a second displaceable spacer 118 arranged on a periphery of the cavity 113 of the second mould portion 110. The first displaceable spacer 116 and the second displaceable spacer 118 are configured to move into three positions on an axis substantially perpendicular to the extrusion direction of the closed tubular parison 106. In the exemplary embodiment represented, the first displaceable spacer 116 and the second displaceable spacer 118 are configured to move into a first position (as already mentioned at least in the previous paragraph) along an axis that is oriented at 90 degrees relative to the extrusion direction of the closed tubular parison 116. It should be noted that alternative angles falling within the range of 85 to 95 degrees are also within the scope of consideration.

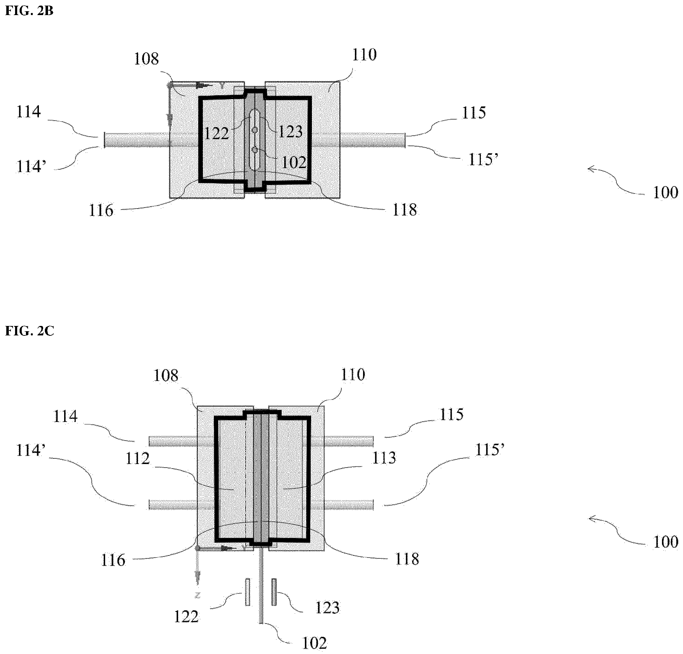

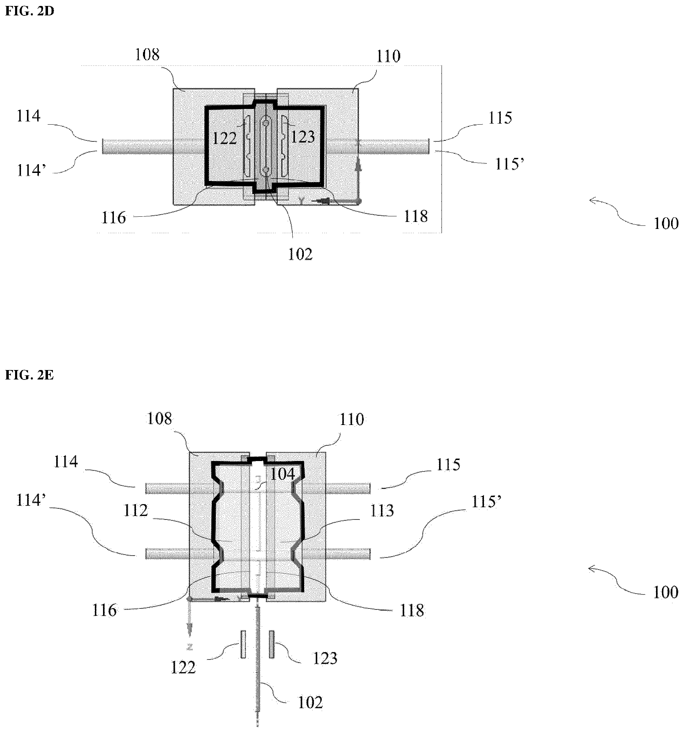

Referring now to FIGS. 2A and 2B, when the blow moulding tool 100 is partially-open (i.e. the mould is in a partially-open position - a second position), the first mould portion 108 and the second mould portion 110 are positioned at a predetermined distance from each other, allowing for the insertion of a third displaceable spacer 120. Hence, the first displaceable spacer 116 and the second displaceable spacer 118 are configured to receive the third displaceable spacer 120 in a region between the first displaceable spacer 116 and the second displaceable spacer 118. The third displaceable spacer 120 comprises a first displaceable half 122 and a second displaceable half 123 (as shown in FIGS. 1A, 2B to 3), being configured to surround the at least one insertion pin 102 (as illustrated in FIG. 1B) and to create a void space inside the closed tubular parison 106 allowing the at least one insertion pin 102 to move and be positioned into alignment with the at least one movement member 114, 114', 115, 115' present in each cavity 112, 113 of the first mould portion 108 and the second mould portion 110 (as presented in FIGS. 2C and 2D).

A method for manufacturing a thermoplastic fuel tank is illustrated in FIGS. 1A to 3. In the case of the exemplary embodiment represented in FIG. 1A, the method comprises an initial step of providing a closed tubular parison 106 with an opening at a first distal end 105. The closed tubular parison 106 serves as a precursor for the tank and is created by melting and shaping the thermoplastic material using an extruder machine (not shown).

Once the closed tubular parison 106 is extruded, it is placed between a first mould portion 108 and a second mould portion 110 of a mould. Each mould portions 108, 110 comprise a cavity 112, 113 with at least one movement member 114, 114', 115, 115' (as depicted in FIG. 1A). As evidenced by the visual representation in FIG. 1A, each cavity comprises a pair of movement members 114, 114', 115, 115', which are arranged parallel to each other and preferably resemble a cylindrical shape. The at least one movement member 114, 114', 115, 115' is configured to move in a direction substantially perpendicular to an extrusion direction of the closed tubular parison 106. Specifically, the direction of movement may be oriented between 85 and 95 degrees relative to the extrusion direction of the closed tubular parison 106.

Subsequently, a third displaceable spacer 120 is provided. The third displaceable spacer 120 comprises a first displaceable half 122 and a second displaceable half 123. Following the provision of the third displaceable spacer 120, at least one insertion pin 102 is surrounded with the first displaceable half 122 and the second displaceable half 123.

In order to position at least one insertion pin 102 within the closed tubular parison 106, the method involves inserting the at least one insertion pin- surrounded by the first displaceable half 122 and the second displaceable half 123 through the opening of the first distal end 105 of the closed tubular parison 106. The insertion pin 102 comprises the at least one component 104 to be positioned within the closed tubular parison 106. The at least one component 104 may have a length equal to or less than a diameter of the closed tubular parison 106. In the exemplary embodiment represented, the at least one component 104 is a pillar. Alternatively, the at least one component 104 can be any one of the following: a baffle, a carrier, or a valve. A pre-blowing step may be performed involving an introduction of pressurized air into the closed tubular parison 106, causing the closed tubular parison 106 to expand and inflate.

Additionally, the at least one component 104 may comprise at least one spring element arranged on one side of the at least one component 104. Preferably, the at least one spring element may be arranged on both sides of the at least one component 104. The spring element can be in the form of a spring, a moving track, or a simple slide, as long as it allows for movement of the component 104.

A first displaceable spacer 116 arranged on a periphery of the cavity 112 of the first mould portion 108 and a second displaceable spacer 118 arranged on a periphery of the cavity 113 of the second mould portion 110 then move into a first position along an axis that is oriented at 90 degrees relative to the extrusion direction of the closed tubular parison 106, wherein the first position corresponds to the blow moulding tool 100 being open. It is worth noting that angles ranging from 85 to 95 degrees are also viable options for consideration.

Furthermore, it should be noted that the order in which the steps of placing the closed tubular parison 106 between the mould portions 108, 110, providing the third displaceable spacer 120, inserting the at least one insertion pin 102 through the opening of the first distal end 105 of the closed tubular parison 106 and moving the displaceable spacers 116, 118 into a first position are performed is not fixed, and they can be performed in any sequence or even simultaneously. This allows for flexibility in the implementation of the method. However, the step of surrounding the at least one insertion pin with the first displaceable half and the second displaceable half is designed to occur after the step of providing the third displaceable spacer 120.

In a further method step, which is illustrated in FIGS. 2A to 2E, the first displaceable spacer 116 arranged on the periphery of the cavity 112 of the first mould portion 108 and a second displaceable spacer 118 arranged on the periphery of the cavity 113 of the second mould portion 110 move into a second position along the axis that is oriented at 90 degrees relative to the extrusion direction of the closed tubular parison 106, wherein the second position corresponds to the blow moulding tool 100 being partially-open. It is worth noting that angles ranging from 85 to 95 degrees are also viable options for consideration. When the blow moulding tool 100 is partially-open, the third displaceable spacer 120 is arranged in a region between the first displaceable spacer 116 and the second displaceable spacer 118 and the at least one insertion pin 102 moves the at least one component 104 into alignment with the at least one movement member 114, 114', 115, 115' present in each cavity 112, 113 of the first mould portion 108 and the second mould portion 110.

Continuously referring to FIGS. 2A to 2E, after arranging the third displaceable spacer 120 between the first displaceable spacer 116 and the second displaceable spacer 118, a first blowing of the closed tubular parison 106 is performed (as exemplified in FIGS. 2A and 2B). A pre-blowing step may be performed prior to the first blowing step and involves the introduction of pressurized air into the closed tubular parison 106, causing the closed tubular parison 106 to expand and inflate. Following that, the pressure inside the mould cavity is reduced after the closed tubular parison 106 has been blown into a desired shape, the third displaceable spacer 120 is removed from the at least one insertion pin 102 , the at least one insertion pin 102 moves within the closed tubular parison 106 (as can be seen in particular from FIGS. 2C and 2D) and, the at least one component 104 is positioned towards the at least one movement member 114, 114', 115, 115'.

In addition, the step of removing the third displaceable spacer 120 from the at the at least one insertion pin 102 comprises a step of splitting the third displaceable spacer 120 into a first displaceable half 122 and a second displaceable half 123, as is shown in FIGS. 2C and 2D.

In a further method step, the at least one component 104 is welded to the closed tubular parison 106by moving the at least one movement member 114, 114', 115, therefore, the at least one movement member 114, 114', 115, 115' weld pad and the at least one component 104 weld pad touch, as depicted in FIG. 2E. Subsequently, the at least one insertion pin 102 is removed from the closed tubular parison 106 (as also shown in FIG. 2E).

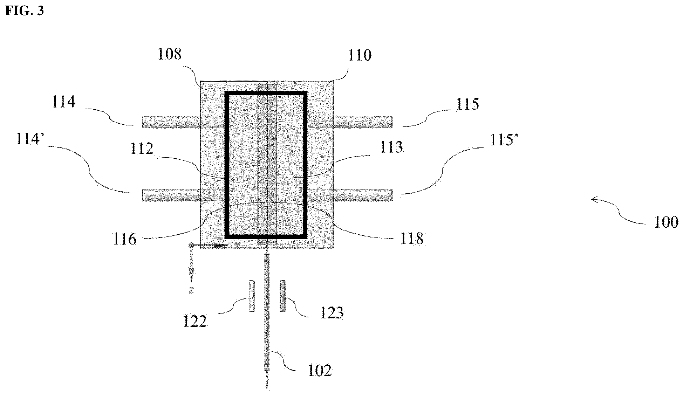

FIG. 3 shows the first displaceable spacer 116 arranged on the periphery of the cavity 112 of the first mould portion 108 and the second displaceable spacer 118 arranged on the periphery of the cavity 113 of the second mould portion 110 moving along the axis that is oriented at 90 degrees relative to the extrusion direction of the closed tubular parison 106, assuming a third position. As already mentioned at the beginning, it is worth noting that angles ranging from 85 to 95 degrees are also viable options for consideration.

The third position corresponds to the blow moulding tool 100 being closed (i.e. the mould is in a closed position); thus, the first mould portion 108 and the second mould portion 110 are brought into contact to define a sealed cavity 112, 113 around the closed tubular parison 106, whereby the mould portions 108, 110 are in intimate contact with each other to form the final shape of the thermoplastic tank, preferably a thermoplastic fuel tank. When the mould is closed, the at least one component 104 resides within the mould (not shown).

Finally, the method further comprises a step of performing a second blowing of the closed tubular parison 106 in order to give correct final shaping for tank manufacturing.

Once the method for manufacturing the thermoplastic tank, preferably the thermoplastic fuel tank, is complete, the mould is opened, and the tank is removed from the mould.

### NUMERICAL REFERENCES TO FIGURES

- 100:: Blow moulding tool
- 102:: Insertion pin
- 104:: Component
- 105:: First distal end
- 106:: Closed tubular parison
- 108:: First mould portion
- 110:: Second mould portion
- 112:: Cavity of the first mould portion
- 113:: Cavity of the second mould portion
- 114, 114':: Movement members present in the cavity of the first mould portion
- 115, 115':: Movement members present in the cavity of the second mould portion
- 116:: First displaceable spacer
- 118:: Second displaceable spacer
- 120:: Third displaceable spacer
- 122:: First displaceable half
- 123:: Second displaceable half

## Claims

1. A blow moulding tool (100) for manufacturing a thermoplastic tank for a vehicle, the blow moulding tool (100) comprising:
▪ at least one insertion pin (102) configured to position at least one component (104) through an opening at a first distal end (105) of a closed tubular parison (106);
▪ a mould configured to receive the closed tubular parison (106), wherein the mould comprises at least:
- a first mould portion (108) and a second mould portion (110) and the mould portions (108, 110) each comprise a cavity (112, 113) with at least one movement member (114, 114', 115, 115') configured to move in a direction substantially perpendicular to an extrusion direction of the closed tubular parison (106);
- a first displaceable spacer (116) arranged on a periphery of the cavity (112) of the first mould portion (108);
- a second displaceable spacer (118) arranged on a periphery of the cavity (113) of the second mould portion (110);
- wherein the first displaceable spacer (116) and the second displaceable spacer (118) are configured to move into each of a first position, a second position and a third position on an axis substantially perpendicular to the extrusion direction of the closed tubular parison (106);
- the first position corresponding to the blow moulding tool (100) being open, the second position corresponding to the blow moulding tool (100) being partially-open, and the third position corresponding to the blow moulding tool (100) being closed;
- when the blow moulding tool (100) is partially-open, the first displaceable spacer (116) and the second displaceable spacer (118) are configured to receive a third displaceable spacer (120) in a region between the first displaceable spacer (116) and the second displaceable spacer (118), and
- wherein the third displaceable spacer (120) comprises a first displaceable half (122) and a second displaceable half (123), the third displaceable spacer (120) being configured to surround the at least one insertion pin (102) and to create a void space inside the closed tubular parison (106) allowing the at least one insertion pin (102) to move and be positioned into alignment with the at least one movement member (114, 114', 115, 115') present in each cavity (112, 113) of the first mould portion (108) and the second mould portion (110).

2. The blow moulding tool (100) according to claim 1, wherein the at least one insertion pin (102) is configured to position a plurality of components (104) through the opening at the first distal end (105) of the closed tubular parison (106).

3. A method for manufacturing a thermoplastic tank for a vehicle, the method comprising at least the steps of:
▪ providing a closed tubular parison (106) with an opening at a first distal end (105);
▪ placing the closed tubular parison (106) between a first mould portion (108) and a second mould portion (110) of a mould, wherein the first mould portion (108) and the second mould portion (110) each comprise a cavity (112, 113) with at least one movement member (114, 114', 115, 115') configured to move in a direction substantially perpendicular to an extrusion direction of the closed tubular parison (106);
▪ providing a third displaceable spacer (120), wherein the third displaceable spacer (120) comprises a first displaceable half (122) and a second displaceable half (123);
▪ surrounding at least one insertion pin (102) with the first displaceable half (122) and the second displaceable half (123);
▪ inserting the at least one insertion pin (102) surrounded by the first displaceable half (122) and the second displaceable half (123) through the opening of the first distal end (105) of the closed tubular parison (106), wherein the at least one insertion pin (102) comprises at least one component (104) to be positioned in the closed tubular parison (106);
▪ moving a first displaceable spacer (116) arranged on a periphery of the cavity (112) of the first mould portion (108) and moving a second displaceable spacer (118) arranged on a periphery of the cavity (113) of the second mould portion (110) into a first position on an axis substantially perpendicular to the extrusion direction of the closed tubular parison (106), wherein the first position corresponds to the blow moulding tool (100) being open;
▪ moving the first displaceable spacer (116) arranged on the periphery of the cavity (112) of the first mould portion (108) and moving the second displaceable spacer (118) arranged on the periphery of the cavity (113) of the second mould portion (110) into a second position on the axis substantially perpendicular to the extrusion direction of the closed tubular parison (106), wherein the second position corresponds to the blow moulding tool (100) being partially-open;
▪ arranging the third displaceable spacer (120) in a region between the first displaceable spacer (116) and the second displaceable spacer (118) when the blow moulding tool (100) is partially-open, and moving the at least one insertion pin (102) into alignment with the at least one movement member (114, 114', 115, 115') present in each cavity (112, 113) of the first mould portion (108) and the second mould portion (110);
▪ performing a first blowing of the closed tubular parison (106);
▪ reducing the pressure within the mould;
▪ removing the third displaceable spacer (120) from the at least one insertion pin (102);
▪ moving the at least one insertion pin (102) within the closed tubular parison (106);
▪ positioning the at least one component (104) towards the at least one movement member (114, 114', 115, 115');
▪ welding the at least one component (104) to the closed tubular parison (106) by moving the at least one movement member (114, 114', 115, 115');
▪ removing the at least one insertion pin (102) from the closed tubular parison (106);
▪ moving the first displaceable spacer (116) arranged on the periphery of the cavity (112) of the first mould portion (108) and moving the second displaceable spacer (118) arranged on the periphery of the cavity (113) of the second mould portion (110) into a third position on the axis substantially perpendicular to the extrusion direction of the closed tubular parison (106), wherein the third position corresponds to the blow moulding tool (100) being closed;
▪ performing a second blowing of the closed tubular parison (106).

4. The method according to claim 3, wherein the step of removing the third displaceable spacer (120) from the at least one insertion pin (102) comprises a step of:
splitting the third displaceable spacer (120) into the first displaceable half (122) and the second displaceable half (123).

5. The method according to claims 3 or 4, wherein the at least one component (104) comprises at least one spring element arranged on one side of the at least one component (104), preferably arranged on both sides of the at least one component (104).

6. The method according to any one of claims 3 to 5, wherein the at least one component (104) has a length equal to or less than a diameter of the closed tubular parison (106).

7. The method according to any one of claims 5 to 6, wherein the at least one component (104) is a pillar.
